# EUROPÄISCHE PATENTSCHRIFT

(11) **EP 2 593 235 B1**
(45) Veröffentlichungstag und Bekanntmachung des Hinweises auf die Patenterteilung: **21.02.2018**
(21) Anmeldenummer: 11719481.1
(22) Anmeldetag: 09.05.2011
(51) Int. Cl.: B05B 1/16, F16K 11/16, F16K 31/524

(54) **MEHRFACHDÜSENKÖRPER MIT MEHRWEGVENTIL**
MULTIPLE NOZZLE HEAD WITH MULTIPORT VALVE
TÊTE DE BUSE MULTIPLE AVEC VANNE MULTIVOIES

(30) Priorität: 16.07.2010 DE 102010036437
(43) Veröffentlichungstag der Anmeldung: 22.05.2013
(73) Patentinhaber: Amazonen-Werke H. Dreyer GmbH & Co. KG, 49205 Hasbergen (DE)
(72) Erfinder: LANGKAMP Laurenz, 49545 Tecklenburg (DE)
(86) Internationale Anmeldenummer: PCT/EP2011/002305
(87) Internationale Veröffentlichungsnummer: WO 2012/007074

(56) Entgegenhaltungen:
- EP-A2- 1 821 017
- FR-A- 1 273 952
- FR-A5- 2 057 131
- GB-A- 576 287
- US-A- 3 186 433
- US-A1- 2002 179 164

## Beschreibung

Die Erfindung betrifft einen Mehrfachdüsenkörper gemäß des Oberbegriffes des Patentanspruches 1.

Ein derartiger Mehrfachdüsenkörper ist beispielsweise durch DE 78 12 539 U1 bekannt. Dieser Mehrfachdüsenkörper weist ein als Dreiwegehahn ausgebildetes Absperrelement auf. Mittels dieses Dreiwegehahnes können die zu den Ausbringdüsen führenden Verbindungsleitungen wahlweise mit der Zuleitung verbunden oder zu ihr abgesperrt werden. Die möglichen Verbindungsmöglichkeiten sind hier sehr eingeschränkt. Weiterhin ist die Verstellung des Dreiwegehahnes nur mit einem relativ hohen Kraftaufwand möglich, weil die durch die Dichtung hervorgerufenen Reibkräfte relativ hoch sind.

Ein weiterer Mehrfachdüsenkörper ist durch die EP 1 661 627 B1 bekannt. Über einen als Kugelhahn ausgebildeten Mehrwegehahn lassen sich verschiedene zu Ausbringdüsen führende Verbindungsleitungen mit einer Zuleitung verbinden. Auch hier sind die möglichen Verbindungsmöglichkeiten eingeschränkt. Ein Dreiwegventil ist aus FR 2 057 131 bekannt. Die kugelartige Absperrventile werden mittels Schaltnocken senkrecht zum Ventilsitz gegen der Kraft der Stellfeder in die freigebende Stellung bewegt. Der Erfindung liegt die Aufgabe zu Grunde, einen Mehrfachdüsenkörper mit einen mit geringen Stellkräften zu verstellenden Absperrelement in kompakter Bauweise mit vielfältigen Einstellmöglichkeiten zu schaffen.

Diese Aufgabe wird durch die kennzeichnenden Merkmale des Patentanspruches 1 gelöst. Infolge dieser Maßnahmen ergibt sich ein äußerst kompakt bauender Mehrfachdüsenkörper dessen als kugelartige Absperrelemente ausgebildete Ventile mit geringen Verstellkräften einstellbar sind. Mit geringen Kräften lassen sich die kugelartigen Absperrelemente aus ihrem Ventilsitz in eine den Durchfluss in der Verbindungsleitung freigebende Stellung verschieben, indem die Kugelelemente die schrägen Wände des Ringabschnittes des Ventilsitzes hinauf rollen.

Eine vorteilhafte Anordnung der Zuleitung zu den Verbindungsleitungen bei kompakter Bauweise für den Mehrfachdüsenkörper wird dadurch erreicht, dass die Einmündungsöffnung der Zuleitung versetzt zu den einen Ventilsitz aufweisenden Abzweigöffnungen der Verbindungsleitungen im Verteilerraum angeordnet ist.

Eine äußerst einfache Ausgestaltung des Betätigungselementes lässt sich dadurch erreichen, dass das Betätigungselement scheibenartig ausgebildet ist.

Um ein oder mehrere Verbindungsleitungen gleichzeitig mit der Zuleitung verbinden zu können, ist vorgesehen, dass das Betätigungselement zumindest zwei Schaltnocken aufweist. Hierdurch können ein oder mehrere Ausbringdüsen gleichzeitig aktiviert werden das heißt, dass die Auszubringendenflüssigkeit von ein oder mehrerer Ausbringdüsen ausgebracht wird

In einer Ausführungsform ist vorgesehen, dass zumindest einer der beiden Schaltnocken des Betätigungselementes derart ausgebildet ist, dass zwei nebeneinander angeordnete Absperrelemente gleichzeitig in eine den Durchfluss in der Verbindungsleitung frei gebenden Stellung bewegbar sind. Hierdurch können somit in einfacher Weise zwei unmittelbar nebeneinander liegende Verbindungsleitungen gleichzeitig mit der Zuleitung verbunden werden.

Um mittels Fernverstellung oder Bordcomputern die Absperrventile des Mehrfachdüsenkörpers in einfacher Weise verstellen bzw. einstellen zu können, ist vorgesehen, dass das Betätigungselement mittels eines motorischen Stellelementes verdrehbar ist.

Eine einfache Ausgestaltung der Ventilelemente lässt sich dadurch erreichen, dass die kugelartigen Ventilelemente als Kugeln ausgebildet sind und mittels Druckfedern in ihren Ventilsitz in Abdichtstellung drückbar sind.

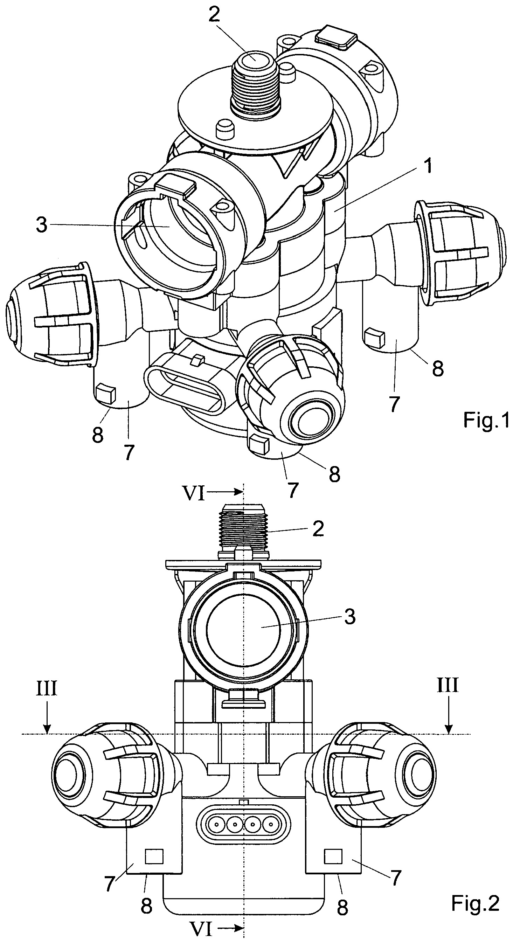

Weitere Einzelheiten der Erfindung sind der Beispielsbeschreibung und den Zeichnungen zu entnehmen. Hierbei zeigen
- Fig. 1: den Mehrfachdüsenkörper in perspektivischer Ansicht,
- Fig. 2: den Mehrfachdüsenkörper in Seitenansicht,
- Fig. 3: den Mehrfachdüsenkörper in der Ansicht III - III,
- Fig. 4: den Mehrfachdüsenkörper in der Ansicht IV - IV,
- Fig. 5: den Mehrfachdüsenkörper in der Ansicht V - V,
- Fig. 6: den Mehrfachdüsenkörper in der Ansicht VI - VI,
- Fig. 7: den Ventilkörper mit dem Ventilsitz der Absperrelemente in der Ansicht gemäß Fig. 5, ausschnittsweise in vergrößerter Darstellungsweise,
- Fig. 8: eine Einstellposition des Betätigungselementes zur Betätigung der Absperrventile in der Darstellungsweise nach Fig. 3, wobei sämtliche Ventilkörper sich in Absperrposition befinden,
- Fig. 9: eine weitere Einstellposition des Betätigungselementes zur Betätigung der Absperrventile in der Darstellungsweise nach Fig. 3, wobei ein Ventilkörper sich in Durchlassposition befindet,
- Fig. 10: eine weitere Einstellposition des Betätigungselementes zur Betätigung der Absperrventile in der Darstellungsweise nach Fig. 3, wobei ein Ventilkörper sich in Durchlassposition befindet,
- Fig. 11: eine weitere Einstellposition des Betätigungselementes zur Betätigung der Absperrventile in der Darstellungsweise nach Fig. 3, wobei zwei Ventilkörper sich in Durchlassposition befinden und
- Fig. 12: eine weitere Einstellposition des Betätigungselementes zur Betätigung der Absperrventile in der Darstellungsweise nach Fig. 3, wobei zwei Ventilkörper sich in Durchlassposition befinden.

Der Mehrfachdüsenkörper weist das Gehäuse 1 auf. An dem Gehäuse ist das Befestigungsmittel 2 angeordnet, mit welchem der Mehrfachdüsenkörper an Rahmenelementen, Verteilergestänge, etc. befestigt werden kann. Im oberen Bereich des Gehäuses 1 des Mehrfachdüsenkörpers ist ein Teil 3 der Flüssigkeitsleitung, an welcher der Mehrfachdüsenkörper an erschließbar ist, angeordnet. Über diese Flüssigkeitsleitung, die beispielsweise an einem Verteilergestänge einer landwirtschaftlichen Feldspritze angeordnet ist, ist dem jeweiligen Mehrfachdüsenkörper die auszubringende Flüssigkeit zuzuführen.

Die Flüssigkeitsleitung 3 ist mit der in dem Gehäuse 1 angeordneten Zuleitung 4 verbunden. Die Zuleitung 4 mündet in dem in dem Gehäuse 1 angeordneten Verteilerraum 5 aus. Von diesem Verteilerraum 5 führen, gemäß des Ausführungsbeispieles, vier Verbindungsleitungen 6 zu in dem Gehäuse 1 angeordneten Ausbringleitungen 7, an deren Enden 8 in nicht dargestellter Weise mittels Überwurfmuttern Ausbringdüsen in bekannter Weise angeordnet sind.

Die Verbindungsleitungen 6 sind im Bereich des Verteilerraumes 5 mittels als Absperrventile 9 ausgebildeten Absperrelementen abzusperren. Über diese Absperrventile 9 sind die Verbindungsleitungen 6 mit der Zuleitung 4 wahlweise verbindbar und/oder ihr gegenüber absperrbar. Die Absperrventile 9 sind über schaltbare Betätigungselemente 11 betätigbar und somit in die jeweilige Absperr- oder Durchflussposition zu bringen.

Die Einmündungsöffnung 12 der Zuleitung 4 ist versetzt zu den einen Ventilsitz1 3 aufweisenden Abzweigöffnungen 14 der Verbindungsleitungen 6 im Verteilerraum 5 angeordnet.

Die Absperrventile 9 weisen jeweils einen in dem Gehäuse 1 angeordneten Ventilsitz 13 auf, welcher jeweils aufgrund der Ausgestaltung von schrägen Wänden 15 einen schräg verlaufenden Ringabschnitt 16 aufweist. Die Absperrelemente 10 sind kugelartig, im Ausführungsbeispiel als Kugeln ausgebildet. Wenn die Kugeln 10 in dem schräg verlaufenden Ringabschnitt 16 des Ventilsitzes 13 sich befinden, wirken sie in dieser Absperrstellung mit dem schräg verlaufenden Ringabschnitt 16 des Ventilsitzes 13 abdichtend zusammen. Den Kugeln 10 sind Druckfedern 17 zugeordnet, mittels welchem sie in Richtung des Ventilsitzes 13 gedrückt werden.

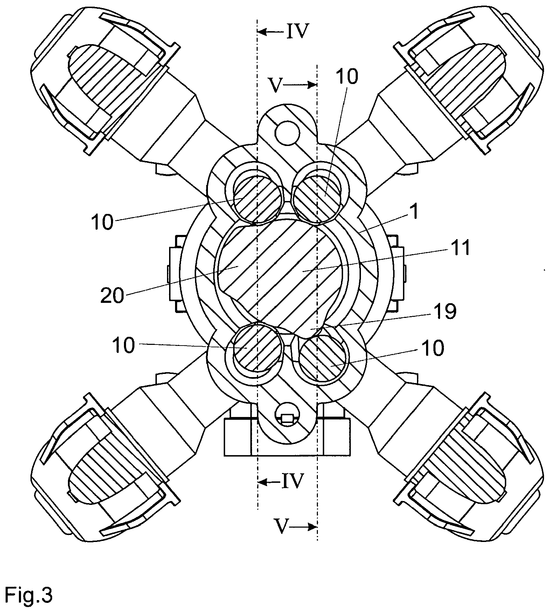

Das schaltbare Betätigungselement 11 ist scheibenartig ausgebildet und drehfest mit einer in dem Gehäuse 1 gelagerten Schaltwelle 18 verbunden. Das Betätigungselement 11 weist mehrere Schaltnocken 19, 20, wie die Fig. 3 zeigt, auf. Gemäß des Ausführungsbeispieles weist das Betätigungselement 11 zwei Schaltnocken 19, 20 auf. Die Schaltwelle 18 des Betätigungselementes 11 ist mit einem motorischen Stellelement 21, welches als Elektromotor ausgebildet ist, drehfest verbunden und somit über das motorische Stellelement 21 um seine Drehachse 22 verdrehbar.

Einer der beiden Schaltnocken 19 ist so ausgestaltet, dass er nur ein als Kugel 10 ausgebildetes Ventilelement aus dem Ventilsitz 13 drücken kann, so dass der Durchfluss zu einer Verbindungsleitung 6 frei gegeben ist. Der andere der beiden Schaltnocken 20 ist so ausgestaltet, dass er zwei nebeneinander angeordnete als Kugeln 10 ausgebildete Absperrelemente gleichzeitig in eine den Durchfluss in die jeweiligen Verbindungsleitungen 6 freigebenden Stellung bewegen kann, das heißt, dass er gleichzeitig zwei als Kugeln 10 ausgebildete Ventilelemente aus ihren Ventilsitzen 13 drücken kann.

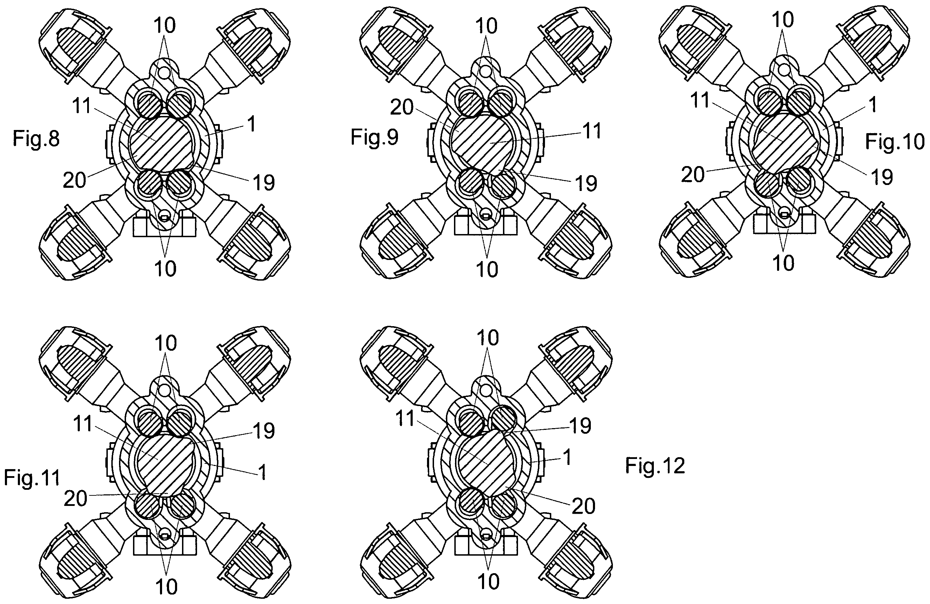

Das Betätigungselement 11 mit den beiden Schaltnocken 19, 20 ist in unterschiedliche Positionen verdrehbar, wie dies für einige mögliche Positionen in den Fig. 8-12 dargestellt ist. Wie hieraus ersichtlich ist, werden je nach Schaltstellung des Betätigungselementes 11 der Durchfluss für keine, eine oder mehrere Verbindungsleitungen 6 zu den Ausbringdüsen führenden Ausbringleitungen 7 freigegeben. Somit können wahlweise keiner, einer oder mehrerer Verbindungsleitungen und somit Ausbringdüsen in unterschiedlicher Kombination die auszubringende Flüssigkeit zugeleitet werden.

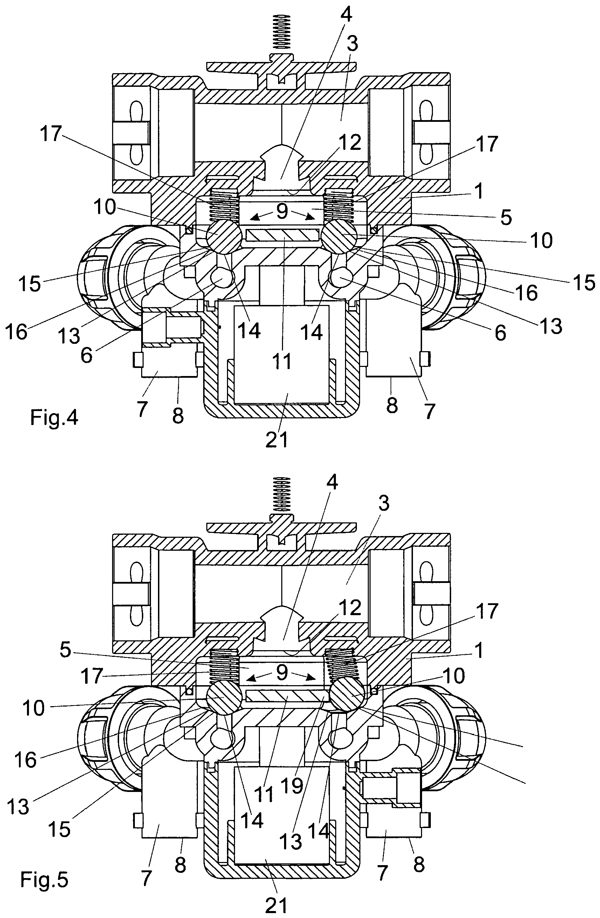

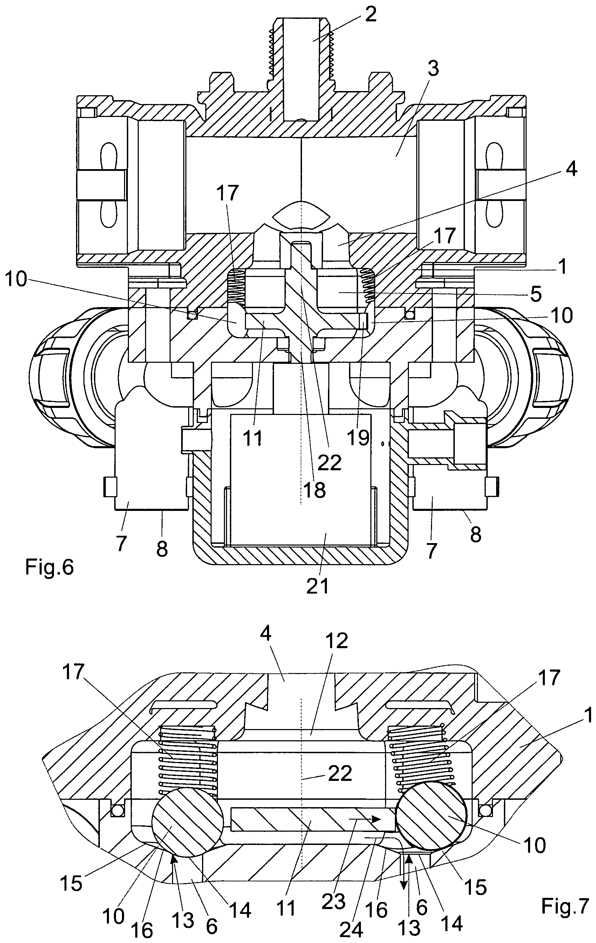

Die Schaltnocken 19, 20 des scheibenartigen Betätigungselementes 11 wirken mit einer zu der Drehachse 22 des Betätigungselementes 11 etwa senkrechten Richtung 23 etwa auf Höhe der Mitte der Kugeln 10 der Absperrventile 9 auf die Kugeln 10 ein und drücken in diese in der zu der Drehachse 22 senkrechten Richtung 23 über die schrägen Wände 15 des Ringsabschnittes 16 des jeweiligen Ventilsitzes 13 aus dem Ventilsitz 13 in eine den Durchfluss, wie durch den Pfeil 24 angedeutet ist, zu der jeweiligen Verbindungsleitung 6 freigebenden Stellung, wie bei der in den Fig. 5 und 7 dargestellten Situation für die dort rechte Kugel 10 eingezeichnet ist.

Das jeweilige motorische Einstellelement 21, welches als Elektromotor ausgebildet ist, ist über nicht dargestellte Verbindungsleitungen mit einer Stromversorgung und einer Steuerungseinrichtung, welche beispielsweise als Bordcomputer ausgebildet sein kann, verbunden

## Patentansprüche

1. Mehrfachdüsenkörper mit mehreren Ausbringdüsen zur Anordnung an der Flüssigkeitsleitung einer landwirtschaftliche Feldspritze, wobei die Flüssigkeitsleitung mit der Zuleitung des Mehrfachdüsenkörpers verbindbar ist, wobei die Zuleitung in einem Verteilerraum ausmündet, wobei von dem Verteilerraum mehrere jeweils zu einer Ausbringdüse führende Verbindungsleitungen abzweigen, wobei in dem Verteilerraum jeweils einer Verbindungsleitung zugeordnetes als Absperrventil ausgebildetes Absperrelement zugeordnet ist, wobei mittels der über ein schaltbares Betätigungselement betätigbare Absperrelemente der Absperrventile ein oder mehrere Verbindungsleitungen mit der Zuleitung wahlweise verbindbar und/oder ihr gegenüber absperrbar sind, wobei das Betätigungselement (11) mehrere Schaltnocken (19, 20) aufweist und um eine Drehachse (22) in unterschiedliche Schaltstellungen drehbar ist, und wobei die Absperrelemente (10) kugelartig ausgebildet und in ihrer Absperrstellung abdichtend in einem einen schräg verlaufende Ringabschnitt (16) aufweisenden Ventilsitz (13) angeordnet sind, **dadurch gekennzeichnet, dass** die kugelartigen Absperrelemente (10) in zumindest annähernd senkrechter Richtung (23) zur Drehachse (22) des Betätigungselementes (11) über die schrägen Wände (15) des Ringabschnittes (16) des Ventilsitzes (13) aus dem Ventilsitz (13) in eine den Durchfluss (24) zu der jeweiligen Verbindungsleitung (6) frei gebenden Stellung bewegbar sind.

2. Mehrfachdüsenkörper nach Anspruch 1, **dadurch gekennzeichnet, dass** die Einmündungsöffnung (12) der Zuleitung (4) versetzt zu den einen Ventilsitz (13) aufweisenden Abzweigöffnungen (14) der Verbindungsleitungen (6) im Verteilerraum (5) angeordnet ist.

3. Mehrfachdüsenkörper nach Anspruch 1, **dadurch gekennzeichnet, dass** das Betätigungselement (11) scheibenartig ausgebildet ist.

4. Mehrfachdüsenkörper nach zumindest einem der vorstehenden Ansprüche, **dadurch gekennzeichnet, dass** das Betätigungselement (11) zumindest zwei Schaltnocken (19, 20) aufweist.

5. Mehrfachdüsenkörper nach zumindest einem der vorstehenden Ansprüche, **dadurch gekennzeichnet, dass** zumindest einer der beiden Schaltnocken (20) des Betätigungselementes (11) derart ausgebildet ist, dass zwei nebeneinander angeordnete Absperrelemente (10) gleichzeitig in eine den Durchfluss (24) in der Verbindungsleitung (6) freigebenden Stellung bewegbar sind.

6. Mehrfachdüsenkörper nach zumindest einem der vorstehenden Ansprüche, **dadurch gekennzeichnet, dass** das Betätigungselement (11) mittels eines motorischen Stellelementes (21) verdrehbar ist.

7. Mehrfachdüsenkörper nach zumindest einem der vorstehenden Ansprüche, **dadurch gekennzeichnet, dass** die kugelartigen Ventilelemente als Kugeln (10) ausgebildet sind und mittels Druckfedern (17) in ihren Ventilsitz (13) in Abdichtstellung drückbar sind.

## Claims

1. Multiple nozzle body with a plurality of discharge nozzles for arrangement on the liquid line of an agricultural field sprayer, wherein the liquid line is connectable to the feed line of the multiple nozzle body, wherein the feed line opens out in a distributing chamber, wherein a plurality of connecting lines each leading to a discharge nozzle branch off from the distributing chamber, wherein a shut-off element which is assigned to a connecting line and is designed as a shut-off valve is in each case assigned in the distributing chamber, wherein one or more connecting lines are optionally connectable to the feed line and/or can be shut off in relation thereto by means of the shut-off elements of the shut-off valves, said shut-off elements being actuable via a switchable actuating element, wherein the actuating element (11) has a plurality of switching cams (19, 20) and is rotatable into different switching positions about an axis of rotation (22), and wherein the shut-off elements (10) are of spherical design and, in their shut-off position, are arranged in a sealing manner in a valve seat (13) having an obliquely running annular portion (16), **characterized in that** the spherical shut-off elements (10) are moveable in an at least approximately perpendicular direction (23) to the axis of rotation (22) of the actuating element (11) from the valve seat (13) over the oblique walls (15) of the annular portion (16) of the valve seat (13) into a position releasing the throughflow (24) to the respective connecting line (6) .

2. Multiple nozzle body according to Claim 1, **characterized in that** the mouth opening (12) of the feed line (4) is arranged offset with respect to the branch openings (14), which have a valve seat (13), of the connecting lines (6) in the distributing chamber (5).

3. Multiple nozzle body according to Claim 1, **characterized in that** the actuating element (11) is designed in the manner of a disc.

4. Multiple nozzle body according to at least one of the preceding claims, **characterized in that** the actuating element (11) has at least two switching cams (19, 20).

5. Multiple nozzle body according to at least one of the preceding claims, **characterized in that** at least one of the two switching cams (20) of the actuating element (11) is designed in such a manner that two shut-off elements (10) arranged next to each other are simultaneously movable into a position releasing the throughflow (24) in the connecting line (6).

6. Multiple nozzle body according to at least one of the preceding claims, **characterized in that** the actuating element (11) is rotatable by means of a motorized adjustment element (21).

7. Multiple nozzle body according to at least one of the preceding claims, **characterized in that** the spherical valve elements are designed as balls (10) and can be pressed into their valve seat (13) in the sealing position by means of compression springs (17).

## Revendications

1. Tête de buse multiple avec plusieurs buses de sortie à agencer sur la conduite de liquide d'un pulvérisateur agricole, dans laquelle la conduite de liquide peut être raccordée à la conduite d'alimentation de la tête de buse multiple, dans laquelle la conduite d'alimentation débouche dans une chambre de distributeur, dans laquelle plusieurs conduites de liaison conduisant respectivement à une buse de sortie partent de la chambre de distributeur, dans laquelle un élément d'arrêt formé par une vanne d'arrêt associée respectivement à une conduite de liaison est associée dans la chambre de distributeur, dans laquelle une ou plusieurs conduite(s) de liaison peut/peuvent être au choix raccordée(s) à la conduite d'alimentation et/ou fermée(s) par rapport à celle-ci au moyen des éléments d'arrêt des vannes d'arrêt actionnable par un élément d'actionnement commutable, dans laquelle l'élément d'actionnement (11) présente plusieurs cames de commutation (19, 20) et peut tourner autour d'un axe de rotation (22) dans différentes positions de commutation, et dans laquelle les éléments d'arrêt (10) sont de forme sphérique et sont disposés dans leur position d'arrêt de façon étanche dans un siège de vanne (13) présentant une partie annulaire inclinée (16), **caractérisée en ce que** les éléments d'arrêt sphériques (10) sont déplaçables dans une direction (23) au moins approximativement perpendiculaire à l'axe de rotation (22) de l'élément d'actionnement (11) sur les parois inclinées (15) de la partie annulaire (16) du siège de vanne (13) à partir du siège de vanne (13) jusqu'à une position libérant le débit (24) vers la conduite de liaison respective (6).

2. Tête de buse multiple selon la revendication 1, **caractérisée en ce que** l'ouverture de l'embouchure (12) de la conduite d'alimentation (4) est disposée en position déplacée par rapport aux ouvertures de départ (14) des conduites de liaison (6), qui présentent un siège de vanne (13), dans la chambre de distributeur (5) .

3. Tête de buse multiple selon la revendication 1, **caractérise en ce que** l'élément d'actionnement (11) est réalisé en forme de disque.

4. Tête de buse multiple selon au moins une des revendications précédentes, **caractérisée en ce que** l'élément d'actionnement (11) présente au moins deux cames de commutation (19, 20).

5. Tête de buse multiple selon au moins une des revendications précédentes, **caractérisée en ce qu'**au moins une des deux cames de commutation (20) de l'élément d'actionnement (11) est configurée de telle manière que deux éléments d'arrêt (10) disposés l'un à côté de l'autre soient mobiles simultanément dans une position libérant le débit (24) dans la conduite de liaison (6).

6. Tête de buse multiple selon au moins une des revendications précédentes, **caractérisée en ce que** l'élément d'actionnement (11) peut tourner au moyen d'un élément de réglage motorisé (21).

7. Tête de buse multiple selon au moins une des revendications précédentes, **caractérisée en ce que** les éléments de vanne sphériques sont réalisés sous forme de billes (10) et peuvent être pressés en position d'étanchéité dans leur siège de vanne (13) au moyen de ressorts de pression (17).
